# EUROPÄISCHE PATENTSCHRIFT

(11) **EP 2 996 926 B1**
(45) Veröffentlichungstag und Bekanntmachung des Hinweises auf die Patenterteilung: **31.01.2018**
(21) Anmeldenummer: 14722600.5
(22) Anmeldetag: 23.04.2014
(51) Int. Cl.: B62D 65/18

(54) **BEFESTIGUNGSVORRICHTUNG UND ARRETIERVORRICHTUNG**
FASTENING DEVICE AND LOCKING DEVICE
DISPOSITIF DE FIXATION ET DISPOSITIF DE BLOCAGE

(30) Priorität: 15.05.2013 DE 102013209038
(43) Veröffentlichungstag der Anmeldung: 23.03.2016
(73) Patentinhaber: Dürr Systems AG, 74321 Bietigheim-Bissingen (DE)
(72) Erfinder: KINCSES, Michael, 70327 Stuttgart (DE); BLUM, Edgar, 36355 Grebenhain (DE)
(74) Vertreter: Hoeger, Stellrecht & Partner Patentanwälte mbB
(86) Internationale Anmeldenummer: PCT/EP2014/058250
(87) Internationale Veröffentlichungsnummer: WO 2014/183965

(56) Entgegenhaltungen:
- EP-A1- 0 691 261
- EP-A1- 2 298 631
- DE-A1- 10 002 481
- DE-U1-202006 011 130
- FR-A1- 2 592 637

## Beschreibung

Die vorliegende Erfindung betrifft eine Befestigungsvorrichtung zum Befestigen eines Werkstücks an einer Bewegungsvorrichtung zum Bewegen des Werkstücks.
Grundsätzlich kann ein Werkstück unmittelbar an der Bewegungsvorrichtung befestigt werden.
Die FR 2 592 637 A1, die EP 0 691 261 A1 und die DE 100 02 481 A1 offenbaren verschiedene Fördervorrichtungen für Werkstücke. Die FR 2 592 637 A1 beispielsweise offenbart eine Befestigungsvorrichtung bzw. eine Arretiervorrichtung gemäß dem Oberbegriff der Ansprüche 1 und 15. Der vorliegenden Erfindung liegt die Aufgabe zugrunde, eine Befestigungsvorrichtung bereitzustellen, welche einen geringen Raumbedarf aufweist und eine sichere Befestigung des Werkstücks an einer Bewegungsvorrichtung ermöglicht.
Diese Aufgabe wird erfindungsgemäß durch eine Befestigungsvorrichtung gemäß Anspruch 1 gelöst.
Dadurch, dass die Befestigungsvorrichtung ein Aufnahmeelement und eine Arretiervorrichtung umfasst, kann das Werkstück mit einem geringen Raumbedarf sicher an einer Bewegungsvorrichtung befestigt werden.
Günstig kann es sein, wenn die Arretiervorrichtung zum lösbaren Festlegen des Aufnahmeelements direkt mit dem Aufnahmeelement in Eingriff bringbar ist.
Beispielsweise kann vorgesehen sein, dass das Aufnahmeelement eine Anlagefläche umfasst, mittels welcher das Aufnahmeelement und ein daran angeordnetes Werkstück zum Fördern des Aufnahmeelements und des daran angeordneten Werkstücks längs einer Förderrichtung an eine Fördervorrichtung anlegbar und/oder auf eine Fördervorrichtung auflegbar sind.

Günstig kann es sein, wenn die Arretiervorrichtung zum lösbaren Festlegen des Aufnahmeelements an der Bewegungsvorrichtung mit einem Abschnitt der Anlagefläche des Aufnahmeelements in Eingriff bringbar ist.

Vorteilhaft kann es sein, wenn die Arretiervorrichtung in einer Arretierstellung an einem Abschnitt des Aufnahmeelements, insbesondere an der Anlagefläche des Aufnahmeelements, angreift und/oder einen Abschnitt des Aufnahmeelements, insbesondere einen Abschnitt der Anlagefläche des Aufnahmeelements, hintergreift.

Eine Anlagefläche ist insbesondere eine Auflagefläche.

Günstig kann es sein, wenn die Arretiervorrichtung eine Greifvorrichtung zum Ergreifen des Aufnahmeelements ist. Mittels einer solchen Greifvorrichtung ist das Aufnahmeelement vorzugsweise bezüglich mindestens zweier Raumrichtungen, insbesondere bezüglich aller drei Raumrichtungen, relativ zu der Bewegungsvorrichtung festlegbar.

Bei einer Ausgestaltung der Erfindung ist vorgesehen, dass das Aufnahmeelement zum Fördern des Aufnahmeelements und eines daran angeordneten Werkstücks längs einer Förderrichtung mittels einer Anlagefläche an eine Fördervorrichtung anlegbar ist und dass zum lösbaren Festlegen des Aufnahmeelements an der Bewegungsvorrichtung die Arretiervorrichtung durch eine Bewegung in einer im Wesentlichen senkrecht zu der Anlagefläche des Aufnahmeelements ausgerichteten Positionierrichtung der Arretiervorrichtung mit dem Aufnahmeelement in Eingriff bringbar ist.

Insbesondere kann vorgesehen sein, dass zum lösbaren Festlegen des Aufnahmeelements an der Bewegungsvorrichtung das Aufnahmeelement und die Arretiervorrichtung relativ zueinander, insbesondere durch eine Bewegung des Aufnahmeelements und/oder durch eine Bewegung der Arretiervorrichtung, in der Positionierrichtung miteinander in Eingriff bringbar sind.

Durch eine Bewegung in der Positionierrichtung ist vorzugsweise die Arretiervorrichtung von einer Ruhestellung in eine Arbeitsstellung bringbar.

Insbesondere in der Arbeitsstellung ist die Arretiervorrichtung vorzugsweise in eine Arretierstellung, in welcher ein Arretierelement der Arretiervorrichtung mit dem Aufnahmeelement in Eingriff ist, und in eine Offenstellung, in welcher das Aufnahmeelement relativ zu dem Arretierelement beweglich ist, bringbar.

Eine Positionierrichtung ist insbesondere eine Angreifrichtung, in welcher die Arretiervorrichtung zum lösbaren Festlegen des Aufnahmeelements an dem Aufnahmeelement angreift.

Alternativ oder ergänzend hierzu kann vorgesehen sein, dass die Positionierrichtung eine Eingriffsrichtung ist, in welcher die Arretiervorrichtung und/oder ein Arretierelement der Arretiervorrichtung relativ zu dem Aufnahmeelement bewegbar ist, um die Arretiervorrichtung und/oder das Arretierelement mit dem Aufnahmeelement in Eingriff zu bringen.

Insbesondere dann, wenn das Aufnahmeelement und/oder die Arretiervorrichtung zur Bewegung von der Ruhestellung in die Arbeitsstellung gedreht oder geschwenkt werden, kann vorgesehen sein, dass die Positionierrichtung diejenige Richtung ist, welche an der Endposition in der Arbeitsstellung tangential zur Drehbewegung ausgerichtet ist.

Vorteilhaft kann es sein, wenn zum lösbaren Festlegen des Aufnahmeelements die Arretiervorrichtung mit einem Abschnitt des Aufnahmeelements in Eingriff bringbar ist, welcher beim Fördern des Aufnahmeelements und eines daran angeordneten Werkstücks an einer Fördervorrichtung anliegt, insbesondere auf der Fördervorrichtung aufliegt.

Eine Förderung des Aufnahmeelements und des daran angeordneten Werkstücks erfolgt vorzugsweise längs eines im Wesentlichen linearen Bewegungspfads. Die Förderrichtung ist somit vorzugsweise im Wesentlichen linear.

Eine Bewegung mittels der Bewegungsvorrichtung ist vorzugsweise eine von der Bewegung längs der Förderrichtung verschiedene Bewegung. Insbesondere kann vorgesehen sein, dass die Bewegung mittels der Bewegungsvorrichtung eine Drehbewegung oder eine Kombination aus einer Drehbewegung und einer linearen Bewegung ist.

Bei einer Ausgestaltung der Erfindung ist vorgesehen, dass die Befestigungsvorrichtung mindestens zwei Aufnahmeelemente umfasst.

Vorzugsweise sind die mindestens zwei Aufnahmeelemente mittels des Werkstücks miteinander verbunden, insbesondere ausschließlich mittels des Werkstücks miteinander verbunden.

Ferner kann vorgesehen sein, dass die Befestigungsvorrichtung mindestens zwei Arretiervorrichtungen umfasst.

Vorzugsweise ist mittels jeweils mindestens einer Arretiervorrichtung jeweils ein Aufnahmeelement relativ zu der Bewegungsvorrichtung festlegbar.

Insbesondere kann vorgesehen sein, dass die Befestigungsvorrichtung mindestens zwei Aufnahmeelemente und mindestens zwei Arretiervorrichtungen umfasst, wobei die mindestens zwei Aufnahmeelemente mittels des Werkstücks miteinander verbunden sind und wobei mittels jeweils mindestens einer Arretiervorrichtung jeweils ein Aufnahmeelement in allen drei Raumrichtungen relativ zu der Bewegungsvorrichtung festlegbar ist.

Es kann vorgesehen sein, dass ein Aufnahmeelement mittels der Arretiervorrichtung formschlüssig festlegbar ist.

Die Verwendung des Singular ist in dieser Beschreibung und den beigefügten Ansprüchen nicht beschränkend zu verstehen. Vielmehr kann vorgesehen sein, dass die Befestigungsvorrichtung beispielsweise mehrere Aufnahmeelemente und/oder mehrere Arretiervorrichtungen umfasst oder dass mehrere Werkstücke an (mindestens) einem Aufnahmeelement angeordnet sind oder dass mehrere Bewegungsvorrichtungen vorgesehen sind.

Bei einer Ausgestaltung der Erfindung ist vorgesehen, dass das Aufnahmeelement im Wesentlichen schienenförmig ausgebildet ist.

Insbesondere kann vorgesehen sein, dass das Aufnahmeelement einen Doppel-T-Träger umfasst oder zumindest abschnittsweise als ein Doppel-T-Träger ausgebildet ist.

Ein Doppel-T-Träger ist insbesondere ein I-Träger.

Ein Doppel-T-Träger umfasst vorzugsweise zwei im Wesentlichen parallel zueinander verlaufende flache Endbereiche, welche mittels eines Stegbereichs miteinander verbunden sind. Der Querschnitt ist folglich im Wesentlichen I-förmig.

Vorteilhaft kann es sein, wenn die Arretiervorrichtung zum lösbaren Festlegen des Aufnahmeelements an der Bewegungsvorrichtung an einem oder beiden der parallel zueinander verlaufenden flachen Endbereiche und/oder an dem Stegbereich angreift.

Es kann vorgesehen sein, dass einer oder beide der parallel zueinander verlaufenden flachen Endbereiche und/oder der Stegbereich eine oder mehrere Ausnehmungen, Einbuchtungen und/oder Öffnungen umfasst oder aufweist, in welche mindestens ein Arretierelement der Arretiervorrichtung eingreifen kann.

Alternativ oder ergänzend hierzu kann vorgesehen sein, dass einer oder beide der parallel zueinander verlaufenden flachen Endbereiche und/oder der Stegbereich einen oder mehrere Vorsprünge umfassen oder aufweisen, mit welchen mindestens ein Arretierelement der Arretiervorrichtung in Eingriff bringbar ist.

Günstig kann es sein, wenn die Arretiervorrichtung ein bewegliches Arretierelement umfasst, mittels welchem zumindest ein Abschnitt des Aufnahmeelements in einer Arretierstellung der Arretiervorrichtung hintergreifbar ist.

Zumindest ein Abschnitt des Aufnahmeelements ist vorzugsweise in der Arretierstellung auf zwei einander gegenüberliegenden Seiten des Abschnitts des Aufnahmeelements von der Arretiervorrichtung, insbesondere von einem Arretierelement oder von zwei Arretierelementen der Arretiervorrichtung, umgeben.

Vorzugsweise ist vorgesehen, dass in der Arretierstellung der Arretiervorrichtung mindestens ein bewegliches Arretierelement einen oder beide der parallel zueinander verlaufenden flachen Endbereiche und/oder den Stegbereich eines Doppel-T-Trägers hintergreift.

Bei einer Ausgestaltung der Erfindung ist vorgesehen, dass die Arretiervorrichtung ein Arretierelement umfasst, welches mit einer Einbuchtung, Öffnung und/oder Ausnehmung des Aufnahmeelements in Eingriff bringbar ist.

Das Arretierelement kann beweglich oder unbeweglich ausgebildet sein.

Beispielsweise kann das Arretierelement als ein unbewegliches Sicherungselement, beispielsweise als ein Schwert oder als ein Bolzen, ausgebildet sein.

Mittels eines, insbesondere unbeweglichen, Arretierelements kann das Aufnahmeelement vorzugsweise bezüglich mindestens einer senkrecht zu der Positionierrichtung verlaufenden Richtung arretiert werden.

Unter einem beweglichen oder unbeweglichen Arretierelement der Arretiervorrichtung ist insbesondere ein Arretierelement zu verstehen, welches relativ zu weiteren Elementen der Arretiervorrichtung, insbesondere zu den relativ zu der Bewegungsvorrichtung festgelegten Elementen der Arretiervorrichtung, beweglich bzw. unbeweglich ausgebildet ist.

Ein Arretierelement, welches lediglich zusammen mit der gesamten Arretiervorrichtung beweglich ist, ist somit vorzugsweise ein unbewegliches Arretierelement.

Günstig kann es sein, wenn das Arretierelement, insbesondere separat oder zusammen mit weiteren oder sämtlichen Elementen der Arretiervorrichtung, beweglich ist.

Es kann vorgesehen sein, dass das Arretierelement relativ zu dem Aufnahmeelement und/oder relativ zu der Bewegungsvorrichtung und/oder relativ zu einem weiteren beweglichen oder unbeweglichen Arretierelement beweglich ist.

Die Arretiervorrichtung umfasst vorzugsweise ein schwenkbares und/oder linear bewegliches Arretierelement, welches vorzugsweise mit dem Aufnahmeelement in Eingriff bringbar ist.

Das Arretierelement ist vorzugsweise relativ zu einem Aufnahmeelement und/oder relativ zu der Bewegungsvorrichtung und/oder relativ zu einem oder weiteren Arretierelementen der Arretiervorrichtung schwenkbar und/oder linear beweglich.

Das schwenkbare und/oder linear bewegliche Arretierelement ist vorzugsweise mit einem oder beiden der parallel zueinander verlaufenden flachen Endbereiche und/oder mit dem Stegbereich eines Doppel-T-Trägers eines Aufnahmeelements in Eingriff bringbar.

Günstig kann es sein, wenn die Arretiervorrichtung ein Arretierelement umfasst, welches um eine im Wesentlichen senkrecht zu einer Positionierrichtung der Arretiervorrichtung verlaufende Achse, insbesondere eine Schwenkachse, schwenkbar ist.

Insbesondere dann, wenn das Aufnahmeelement als ein Doppel-T-Träger ausgebildet ist oder einen Doppel-T-Träger umfasst, kann vorgesehen sein, dass die Achse, um welche das Arretierelement der Arretiervorrichtung schwenkbar ist, zumindest näherungsweise parallel oder senkrecht zu einer Längsrichtung des Doppel-T-Trägers verläuft.

Eine Längsrichtung des Doppel-T-Trägers ist diejenige Richtung, welche senkrecht zu einer Querschnittebene verläuft, wobei ein in der Querschnittebene genommener Querschnitt des Doppel-T-Trägers im Wesentlichen I-förmig ist.

Die Achse, um welche ein Arretierelement schwenkbar ist und/oder die Längsrichtung eines Doppel-T-Trägers ist vorzugsweise im Wesentlichen parallel zur Förderrichtung, solange das Aufnahmeelement und das daran angeordnete Werkstück an der Fördervorrichtung angeordnet sind.

Vorteilhaft kann es sein, wenn die Arretiervorrichtung eine Betätigungsvorrichtung zum Betätigen eines Arretierelements umfasst.

Insbesondere kann vorgesehen sein, dass die Arretiervorrichtung eine eine Exzentervorrichtung und/oder eine Kulissenvorrichtung, insbesondere eine Kulissenbahnvorrichtung, umfassende Betätigungsvorrichtung zum Betätigen eines Arretierelements der Arretiervorrichtung umfasst.

Vorteilhaft kann es sein, wenn die Arretiervorrichtung mehrere Arretierelemente umfasst, welche mittels der Betätigungsvorrichtung, insbesondere mittels der Exzentervorrichtung und/oder der Kulissenvorrichtung, betätigbar sind.

Die Arretiervorrichtung umfasst vorzugsweise eine Betätigungsvorrichtung zum Betätigen eines Arretierelements der Arretiervorrichtung, wobei die Betätigungsvorrichtung ein Betätigungselement zum Betätigen des Arretierelements umfasst, mittels welchem das Arretierelement wahlweise in eine Arretierstellung, in welcher das Arretierelement mit dem Aufnahmeelement in Eingriff ist, und in eine Offenstellung, in welcher das Aufnahmeelement relativ zu dem Arretierelement beweglich ist, bringbar ist.

Ferner kann vorgesehen sein, dass die Arretiervorrichtung eine Sperrvorrichtung umfasst, mittels welcher ein unerwünschtes Bewegen des Arretierelements von einer Arretierstellung, in welcher das Arretierelement mit dem Aufnahmeelement in Eingriff ist, in eine Offenstellung, in welcher das Aufnahmeelement relativ zu dem Arretierelement beweglich ist, und/oder von der Offenstellung in die Arretierstellung sperrbar ist.

Die Sperrvorrichtung umfasst vorzugsweise eine Exzentervorrichtung und/oder eine Kulissenvorrichtung.

Insbesondere kann vorgesehen sein, dass die Betätigungsvorrichtung und die Sperrvorrichtung durch eine gemeinsame Exzentervorrichtung und/oder eine gemeinsame Kulissenvorrichtung gebildet sind.

Die Exzentervorrichtung kann exzentrisch gelagerte Betätigungselemente und/oder exzentrisch gelagerte Sperrelemente umfassen.

Günstig kann es sein, wenn mindestens ein exzentrisch gelagertes Betätigungselement, mindestens ein exzentrisch gelagertes Sperrelement und/oder ein Antriebselement zum Antreiben der Betätigungsvorrichtung und/oder der Sperrvorrichtung auf einer gemeinsamen Welle angeordnet sind.

Es kann vorgesehen sein, dass das Aufnahmeelement mittels mindestens eines Arretierelements bezüglich einer ersten Raumrichtung und bezüglich einer zu der ersten Raumrichtung im Wesentlichen senkrechten zweiten Raumrichtung relativ zu der Bewegungsvorrichtung lösbar festlegbar ist.

Es ist vorgesehen, dass das Aufnahmeelement mittels mindestens eines Arretierelements bezüglich aller drei im Wesentlichen senkrecht zueinander ausgerichteten Raumrichtungen relativ zu der Bewegungsvorrichtung lösbar festlegbar ist.

Erfindungsgemäß ist vorgesehen, dass die Arretiervorrichtung mindestens zwei Arretierelemente umfasst, wobei das Aufnahmeelement mittels mindestens eines Arretierelements bezüglich einer ersten Raumrichtung und bezüglich einer zu der ersten Raumrichtung im Wesentlichen senkrechten zweiten Raumrichtung relativ zu der Bewegungsvorrichtung lösbar festlegbar ist und wobei das Aufnahmeelement mittels mindestens eines weiteren Arretierelements bezüglich einer dritten Raumrichtung, welche im Wesentlichen senkrecht zu der ersten Raumrichtung und zu der zweiten Raumrichtung ist, relativ zu der Bewegungsvorrichtung lösbar festlegbar ist.

Insbesondere kann vorgesehen sein, dass das Aufnahmeelement mittels der mindestens zwei Arretierelemente formschlüssig festlegbar ist.

Günstig kann es sein, wenn das Aufnahmeelement mittels mindestens eines Arretierelements durch ein Eingreifen in eine Einbuchtung, Öffnung und/oder Ausnehmung in dem Aufnahmeelement bezüglich der dritten Raumrichtung relativ zu der Bewegungsvorrichtung lösbar festlegbar ist.

Die erfindungsgemäße Befestigungsvorrichtung eignet sich insbesondere zur Verwendung in einer Förderanlage zum Fördern von Werkstücken.

Die Erfindung betrifft daher auch eine Förderanlage zum Fördern von Werkstücken.

Der Erfindung liegt diesbezüglich die Aufgabe zugrunde, eine Förderanlage zum Fördern von Werkstücken bereitzustellen, bei welcher ein Werkstück mit geringem Raumbedarf sicher an einer Bewegungsvorrichtung lösbar festlegbar ist.

Diese Aufgabe wird erfindungsgemäß dadurch gelöst, dass die Förderanlage zum Fördern von Werkstücken Folgendes umfasst:
- eine erfindungsgemäße Befestigungsvorrichtung;
- eine Bewegungsvorrichtung zum Bewegen eines Werkstücks; und
- eine Fördervorrichtung, mittels welcher das Werkstück, das an einem Aufnahmeelement der Befestigungsvorrichtung angeordnet ist, förderbar ist.

Die erfindungsgemäße Förderanlage weist vorzugsweise einzelne oder mehrere der im Zusammenhang mit der erfindungsgemäßen Befestigungsvorrichtung beschriebenen Merkmale und/oder Vorteile auf.

Die Arretiervorrichtung ist bei der erfindungsgemäßen Förderanlage vorzugsweise an der Bewegungsvorrichtung angeordnet, insbesondere an der Bewegungsvorrichtung festgelegt.

Ferner betrifft die vorliegende Erfindung eine Arretiervorrichtung.

Der Erfindung liegt diesbezüglich die Aufgabe zugrunde, eine Arretiervorrichtung bereitzustellen, mittels welcher ein zu arretierendes Element mit geringem Raumbedarf sicher befestigt werden kann.

Diese Aufgabe wird erfindungsgemäß durch eine Arretiervorrichtung gemäß Anspruch 15 gelöst.

Die erfindungsgemäße Arretiervorrichtung weist vorzugsweise einzelne oder mehrere der im Zusammenhang mit der erfindungsgemäßen Befestigungsvorrichtung und/oder der erfindungsgemäßen Förderanlage beschriebenen Merkmale und/oder Vorteile auf.

Vorteilhaft kann es sein, wenn das zu arretierende Element ein Aufnahmeelement zur Aufnahme eines Werkstücks ist.

Bei einer Ausgestaltung der Erfindung ist vorgesehen, dass die Arretiervorrichtung eine Sperrvorrichtung umfasst, mittels welcher ein unerwünschtes Bewegen des Arretierelements von der Arretierstellung in die Offenstellung und/oder von der Offenstellung in die Arretierstellung sperrbar ist.

Die Sperrvorrichtung umfasst insbesondere eine Exzentervorrichtung und/oder eine Kulissenvorrichtung, insbesondere eine Kulissenbahnvorrichtung.

Es kann vorgesehen sein, dass die Betätigungsvorrichtung und die Sperrvorrichtung eine gemeinsame Exzentervorrichtung und/oder eine gemeinsame Kulissenvorrichtung, insbesondere Kulissenbahnvorrichtung, umfassen.

Die erfindungsgemäße Arretiervorrichtung ist insbesondere in der erfindungsgemäßen Befestigungsvorrichtung und/oder in der erfindungsgemäßen Förderanlage verwendbar.

Ferner können die erfindungsgemäße Befestigungsvorrichtung, die erfindungsgemäße Förderanlage und/oder die erfindungsgemäße Arretiervorrichtung einzelne oder mehrere der nachfolgend beschriebenen Merkmale und/oder Vorteile aufweisen:
Es kann vorgesehen sein, dass das Aufnahmeelement einen Vorsprung, eine Ausbuchtung und/oder ein zusätzliches Element umfasst, welches zum lösbaren Festlegen des Aufnahmeelements an der Bewegungsvorrichtung mit der Arretiervorrichtung in Eingriff bringbar ist.

Beispielsweise kann vorgesehen sein, dass ein Aufnahmeelement oder zwei Aufnahmeelemente zum gemeinsamen Aufnehmen eines Werkstücks mit Pins versehen sind, welche mit einem an der Bewegungsvorrichtung anordenbaren und/oder angeordneten Haken in Eingriff bringbar sind. Insbesondere kann vorgesehen sein, dass die Pins mit Haken umschlossen werden können.

Ein Aufnahmeelement kann beispielsweise als ein sogenannter Ski-Bar ausgebildet sein.

Alternativ hierzu kann vorgesehen sein, dass ein Aufnahmeelement als ein sogenannter Skid ausgebildet ist.

Vorzugsweise sind sämtliche Elemente und Abschnitte des Aufnahmeelements, mit welchen die Arretiervorrichtung in Eingriff bringbar ist, in einen Querschnitt des Aufnahmeelements, insbesondere in einen Querschnitt eines Doppel-T-Trägers eines Aufnahmeelements, beispielsweise eines Skid-Bars, integriert. Hierdurch ergibt sich ein besonders geringer Raumbedarf.

Es kann vorgesehen sein, dass mindestens ein Arretierelement durch Betätigung, insbesondere Drehung, beispielsweise um 90° oder um 180°, mindestens eines exzentrisch gelagerten Betätigungselements und/oder mindestens eines exzentrisch gelagerten Sperrelements, von der Offenstellung in die Arretierstellung und/oder von der Arretierstellung in die Offenstellung bringbar ist.

Dabei können beispielsweise einem Betätigungselement und/oder einem Sperrelement jeweils ein oder zwei Arretierelemente zugeordnet sein.

Zum Drehen des mindestens einen exzentrisch gelagerten Betätigungselements und/oder des mindestens einen exzentrisch gelagerten Sperrelements ist vorzugsweise ein Antriebselement vorgesehen. Das Antriebselement kann beispielsweise zur Drehung um 90° mit einem Betätiger betätigt werden. Zur Drehung um 180° wird das Antriebselement vorzugsweise mit zwei Betätigern nacheinander betätigt.

Eine Drehachse des Antriebselements ist vorzugsweise im Wesentlichen senkrecht oder parallel zur Positionierrichtung.

Bei einer weiteren Ausgestaltung der Befestigungsvorrichtung und/oder der Arretiervorrichtung kann eine Kulissenvorrichtung, eine Exzentervorrichtung und/oder ein externer Antrieb vorgesehen sein, um mindestens ein Arretierelement zu bewegen, beispielsweise zusammenzudrücken oder auseinander zu drücken, insbesondere in eine Offenstellung und/oder in eine Arretierstellung zu bringen.

Die Befestigungsvorrichtung ist vorzugsweise selbsthemmend, um ein eigenständiges Öffnen möglichst zu verhindern.

Das Aufnahmeelement wird vorzugsweise durch Formschluss und/oder durch Kraftschluss mittels der Arretiervorrichtung lösbar an der Bewegungsvorrichtung festgelegt.

Die erfindungsgemäße Befestigungsvorrichtung ermöglicht insbesondere eine einfache mechanische Verriegelung und/oder eine einfache mechanische Verriegelungsbetätigung.

Die erfindungsgemäße Befestigungsvorrichtung, die erfindungsgemäße Förderanlage und/oder die erfindungsgemäße Arretiervorrichtung können insbesondere in Verbindung mit Prüfstationen und/oder mit Lackieranlagen, insbesondere Tauchlackieranlagen, verwendet werden.

Grundsätzlich eignet sich die erfindungsgemäße Arretiervorrichtung für sämtliche Fälle, wenn Werkstücke, insbesondere Fahrzeugkarossen, auf Aufnahmeelemente und/oder Bewegungsvorrichtungen aufgesetzt und/oder lösbar festgelegt werden.

Die Förderanlage kann dabei eine Rollenförderanlage oder eine Hängeförderanlage, beispielsweise eine UBS-Gehänge-Anlage, sein.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Seitenansicht einer Förderanlage zum Fördern von Werkstücken, insbesondere Fahrzeugkarosserien;
- Fig. 2: eine schematische perspektivische Darstellung einer Befestigungsvorrichtung der Förderanlage zum Befestigen eines Werkstücks an einer Bewegungsvorrichtung der Förderanlage, wobei Arretiervorrichtungen der Befestigungsvorrichtung in einer Offenstellung angeordnet sind;
- Fig. 3: eine schematische perspektivische Darstellung einer Arretiervorrichtung der Befestigungsvorrichtung aus Fig. 2, wobei die Arretiervorrichtung in der Offenstellung angeordnet ist;
- Fig. 4: eine der Fig. 3 entsprechende schematische perspektivische Darstellung der Arretiervorrichtung, wobei die Arretiervorrichtung in einer Arretierstellung angeordnet ist;
- Fig. 5: eine der Fig. 2 entsprechende schematische perspektivische Darstellung der Befestigungsvorrichtung, wobei die Arretiervorrichtungen in der Arretierstellung angeordnet sind;
- Fig. 6: eine schematische perspektivische Darstellung einer alternativen Ausführungsform einer Arretiervorrichtung;
- Fig. 7: eine schematische perspektivische Darstellung einer nicht erfindungsgemäßen Ausführungsform einer Arretiervorrichtung, wobei die Arretiervorrichtung in einer Arretierstellung angeordnet ist; und
- Fig. 8: eine schematische perspektivische Darstellung der Arretiervorrichtung aus Fig. 7, wobei die Arretiervorrichtung in einer Offenstellung angeordnet ist.

Gleiche oder funktional äquivalente Elemente sind in sämtlichen Figuren mit denselben Bezugszeichen versehen.

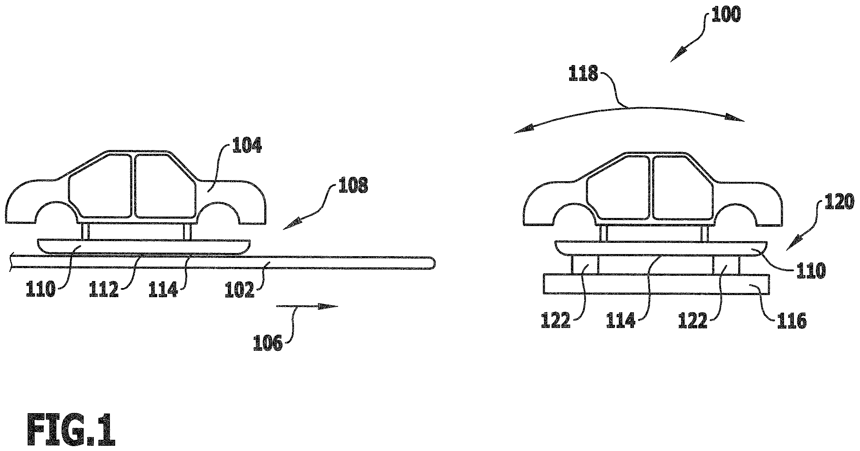

Eine in den Fig. 1 bis 5 dargestellte, als Ganzes mit 100 bezeichnete Förderanlage umfasst eine Fördervorrichtung 102 zum Fördern von Werkstücken 104, insbesondere Fahrzeugkarosserien, längs einer Förderrichtung 106.

Die Werkstücke 104 sind hierzu mittels einer Werkstückaufnahme 108 aufnehmbar.

Insbesondere kann die Werkstückaufnahme 108 dabei durch zwei Aufnahmeelemente 110 gebildet sein.

Die Aufnahmeelemente 110 sind insbesondere im Wesentlichen kufenförmig an dem Werkstück 104 angeordnet und werden daher beispielsweise als "Ski-Bar" bezeichnet.

Alternativ zu einer solchen Werkstückaufnahme 108 kann auch die Verwendung von sogenannten Skids vorgesehen sein.

Zum Fördern der Werkstücke 104 mittels der Fördervorrichtung 102 kann das Werkstück 104 zusammen mit den Aufnahmeelementen 110 an die Fördervorrichtung 102 angelegt, insbesondere auf die Fördervorrichtung 102 aufgelegt werden.

Die Aufnahmeelemente 110 umfassen hierzu Anlageflächen 112 bzw. Auflageflächen 114.

Die Fördervorrichtung 102 kann beispielsweise als eine Rollenfördervorrichtung oder als eine Hängefördervorrichtung ausgebildet sein.

Insbesondere dann, wenn die Förderanlage 100 Bestandteil einer (nicht dargestellten) Tauchlackieranlage ist, kann vorgesehen sein, dass die Förderanlage 100 eine Bewegungsvorrichtung 116 umfasst.

Mittels einer solchen Bewegungsvorrichtung 116 kann das Werkstück 104 zusammen mit den Aufnahmeelementen 110 beispielsweise um eine im Wesentlichen horizontale Achse gedreht werden, insbesondere um das Werkstück 104 in ein (nicht dargestelltes) Tauchbecken einzutauchen.

Insbesondere kann das Werkstück 104 zusammen mit dem Aufnahmeelement 110 in einer von der Förderrichtung 106 verschiedenen, nicht linearen Bewegungsrichtung 118 bewegt werden.

Zum lösbaren Festlegen des Werkstücks 104 an der Bewegungsvorrichtung 116 ist eine Befestigungsvorrichtung 120 vorgesehen.

Die Befestigungsvorrichtung 120 umfasst die Aufnahmeelemente 110, mittels welchen das Werkstück 104 aufgenommen ist, und Arretiervorrichtungen 122, mittels welchen die Aufnahmeelemente 110 samt dem daran angeordneten Werkstück 104 lösbar an der Bewegungsvorrichtung 116 festlegbar sind.

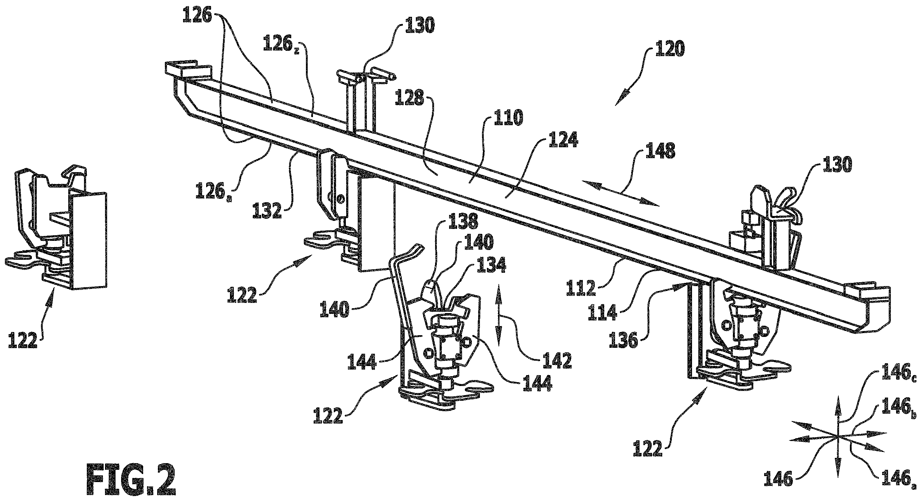

Wie insbesondere Fig. 2 zu entnehmen ist, umfasst die Befestigungsvorrichtung 120 mehrere Arretiervorrichtungen 122, beispielsweise zwei Arretiervorrichtungen 122 pro Aufnahmeelement 110, das heißt insgesamt vier Arretiervorrichtungen 122.

Die Aufnahmeelemente 110 umfassen vorzugsweise einen im Wesentlichen schienenförmigen Träger, insbesondere einen Doppel-T-Träger 124.

Ein solcher Doppel-T-Träger 124 umfasst zwei im Wesentlichen parallel zu einander verlaufende flache Endbereiche 126 und einen die flachen Endbereiche 126 miteinander verbindenden Stegbereich 128.

An einem dem Werkstück 104 zugewandten flachen Endbereich 126z des Doppel-T-Trägers 124 sind vorzugsweise Werkstückträgerelemente 130 zur Befestigung des Werkstücks 104 an dem Aufnahmeelement 110 angeordnet.

Eine dem Werkstück 104 abgewandte Oberfläche 132 eines dem Werkstück 104 abgewandten flachen Endbereichs 126a bildet die Anlagefläche 112 bzw. die Auflagefläche 114 zum Anlegen bzw. Auflegen des Aufnahmeelements 110 und des daran angeordneten Werkstücks 104 auf die Fördervorrichtung 102.

Die Arretiervorrichtung 122 greift vorzugsweise an dem dem Werkstück 104 abgewandten flachen Endbereich 126a des Doppel-T-Trägers 124 an, um das Aufnahmeelement 110 lösbar festzulegen.

Das Aufnahmeelement 110 kann hierzu insbesondere auf eine Auflagefläche 134 der Arretiervorrichtung 122 aufgelegt werden.

Insbesondere kann das Aufnahmeelement 110 mit der Auflagefläche 114, insbesondere der Oberfläche 132, auf die Auflagefläche 134 der Arretiervorrichtung 122 aufgelegt werden.

Zum Arretieren des Aufnahmeelements 110 mittels der Arretiervorrichtung 122 weist der dem Werkstück 104 abgewandte flache Endbereich 126a des Doppel-T-Trägers 124 eine Ausnehmung 136 auf.

In die Ausnehmung 136 kann ein Arretierelement 138, insbesondere ein Sicherungselement 140, der Arretiervorrichtung 122 eingreifen.

Das Arretierelement 138 der Arretiervorrichtung 122 ist dabei ein unbewegliches Arretierelement 138, welches mit dem Aufnahmeelement 110 dadurch in Eingriff bringbar ist, dass das Aufnahmeelement 110 auf die Arretiervorrichtung 122 aufgesetzt wird oder die Arretiervorrichtung 122 als Ganzes auf das Aufnahmeelement 110 zubewegt wird.

Das unbewegliche Arretierelement 138 ist dabei insbesondere relativ zu weiteren Elementen der Arretiervorrichtung 122, welche an der Bewegungsvorrichtung 116 festgelegt sind, unbeweglich ausgebildet.

Das Aufnahmeelement 110 und die Arretiervorrichtung 122 sind insbesondere in einer Positionierrichtung 142 relativ zueinander bewegbar, um die Arretiervorrichtung 122 von einer Ruhestellung, in welcher das Aufnahmeelement 110 nicht mit der Arretiervorrichtung 122 arretierbar ist, in eine Arbeitsstellung, in welcher das Aufnahmeelement 110 mittels der Arretiervorrichtung 122 arretierbar ist, zu bringen.

Mittels des unbeweglichen Arretierelements 138 und weiteren Arretierelementen 144 ist das Aufnahmeelement 110 mittels der Arretiervorrichtung 122 bezüglich aller drei Raumrichtungen 146 festlegbar.

Insbesondere ist das Aufnahmeelement 110 in einer ersten Raumrichtung 146a, in einer zweiten Raumrichtung 146b und in einer dritten Raumrichtung 146c festlegbar. Die Raumrichtungen 146a, 146b und 146c sind dabei im Wesentlichen senkrecht zueinander ausgerichtet.

Die erste Raumrichtung 146a ist vorzugsweise eine Längsrichtung 148 des Doppel-T-Trägers 124.

Mittels des unbeweglichen Arretierelements 138 ist das Aufnahmeelement 110 vorzugsweise bezüglich der ersten Raumrichtung 146a und bezüglich der zweiten Raumrichtung 146b lösbar festlegbar.

Bei der Verwendung von mehreren Arretiervorrichtungen 122 für jeweils ein Aufnahmeelement 110 kann vorgesehen sein, dass nicht sämtliche, beispielsweise nur eine, der Arretiervorrichtungen 122 ein solches unbewegliches Arretierelement 138 umfassen (siehe Fig. 2).

Mittels der weiteren Arretierelemente 144, welche insbesondere bewegliche Arretierelemente 144 sind, ist das Aufnahmeelement 110 vorzugsweise bezüglich der zweiten Raumrichtung 146b und bezüglich der dritten Raumrichtung 146c lösbar festlegbar.

Die dritte Raumrichtung 146c ist vorzugsweise im Wesentlichen parallel zur Positionierrichtung 142.

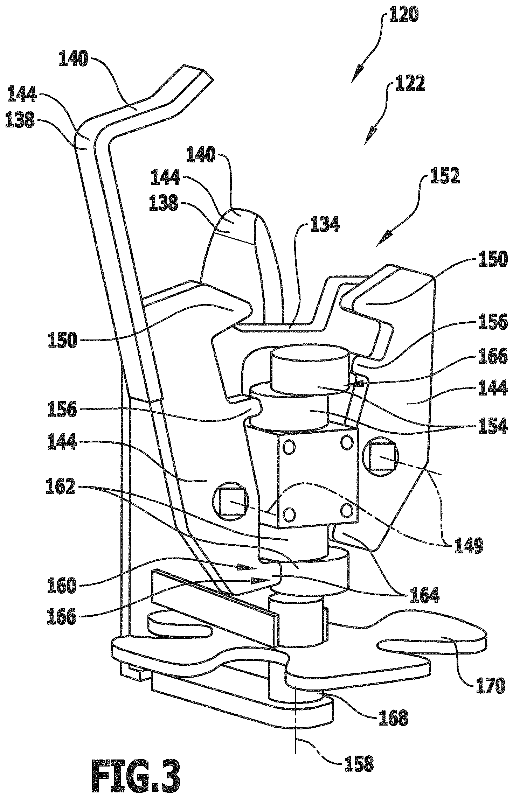

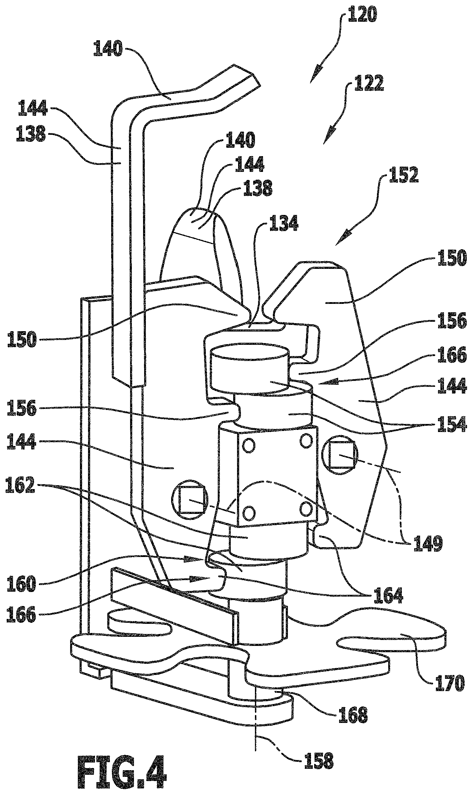

Wie insbesondere den Fig. 3 und 4 zu entnehmen ist, ist das als Sicherungselement 140 ausgebildete unbewegliche Arretierelement 138 insbesondere als ein Schwert ausgebildet.

Alternativ oder ergänzend hierzu kann vorgesehen sein, dass ein funktionell im Wesentlichen gleiches unbewegliches Arretierelement 138 als ein Bolzen ausgebildet ist.

Die beweglichen Arretierelemente 144 sind insbesondere drehbare oder schwenkbare Arretierelemente 144.

Die Arretierelemente 144 sind hierzu insbesondere um im Wesentlichen parallel zueinander verlaufende und voneinander beabstandete Schwenkachsen 149 schwenkbar.

Die Arretierelemente 144 weisen Eingriffabschnitte 150 auf, mittels welchen die Arretierelemente 144 mit dem Aufnahmeelement 110, insbesondere mit dem dem Werkstück 104 abgewandten flachen Endbereich 146a des Doppel-T-Trägers 124 des Aufnahmeelements 110, in Eingriff bringbar sind (siehe insbesondere Fig. 3 und 4).

Die Eingriffabschnitte 150 sind durch die Schwenkung der Arretierelemente 144 um die Schwenkachsen 149 aufeinanderzu oder voneinander weg bewegbar.

Zum Bewegen der Eingriffsabschnitte 150 bzw. zum Schwenken der Arretierelemente 144 umfasst die Arretiervorrichtung 122 eine Betätigungsvorrichtung 152.

Die Betätigungsvorrichtung 152 umfasst zwei Betätigungselemente 154, welche zum Betätigen der Arretierelemente 144 dienen.

Die Betätigungselemente 154 sind exzentrisch gelagerte Betätigungselemente 154, an deren Umfangsfläche die Arretierelemente 144 mit Betätigungsabschnitten 156 der Arretierelemente 144 anliegen.

Aufgrund der exzentrischen Lagerung der Betätigungselemente 154 werden die Betätigungsabschnitte 156 der Arretierelemente 144 und somit auch die Eingriffabschnitte 150 der Arretierelemente 144 durch eine Drehung der Betätigungselemente 154 um eine Drehachse 158 der Betätigungsvorrichtung 152 aufeinanderzu oder voneinander weg bewegt.

Zur Vermeidung einer unerwünschten Bewegung der Arretierelemente 144 umfasst die Arretiervorrichtung 122 eine Sperrvorrichtung 160.

Die Sperrvorrichtung 160 umfasst zwei Sperrelemente 162.

Die Sperrelemente 162 sind exzentrisch gelagerte Sperrelemente 162.

Die exzentrisch gelagerten Sperrelemente 162 sind mit Sperrabschnitten 164 der Arretierelemente 144 in Kontakt bringbar. Insbesondere stehen die Sperrabschnitte 164 mit Umfangsflächen der Sperrelemente 162 der Sperrvorrichtung 160 in Kontakt.

Durch die exzentrische Lagerung der Sperrelemente 162 kann Einfluss auf die Positionen der Sperrabschnitte 164 der Arretierelemente 144 und somit auf den Abstand der Eingriffabschnitte 150 der Arretierelemente 144 voneinander genommen werden.

Sowohl die Betätigungsvorrichtung 152 als auch die Sperrvorrichtung 160 sind als Exzentervorrichtung 166 ausgebildet.

Bei der in den Fig. 3 und 4 dargestellten Ausführungsform der Arretiervorrichtung 122 bilden die Betätigungsvorrichtung 152 und die Sperrvorrichtung 160 eine gemeinsame Exzentervorrichtung 166 zum Betätigen der Arretierelemente 144.

Die Betätigungselemente 154 und die Sperrelemente 162 sind auf einer gemeinsamen Welle 168 der Arretiervorrichtung 122 angeordnet und um die gemeinsame Drehachse 158 drehbar.

In den Fig. 3 und 4 sind die Betätigungselemente 154 und die Betätigungsabschnitte 156 der Arretierelemente 144 getrennt von den Sperrelementen 162 und den Sperrabschnitten 164 der Arretierelemente 144 dargestellt.

In Abhängigkeit von der Stellung der Arretierelemente 144 fungieren jedoch auch die Betätigungselemente 154 als Sperrelemente 162 und die Sperrelemente 162 als Betätigungselemente 154.

Entsprechend fungieren die Betätigungsabschnitte 156 der Arretierelemente 144 als Sperrabschnitte 164 sowie die Sperrabschnitte 164 der Arretierelemente 144 als Betätigungsabschnitte 156.

Das einem Arretierelement 144 zugeordnete Betätigungselement 154 und das ebenfalls diesem Arretierelement 144 zugeordnete Sperrelement 162 sind bezüglich einer Drehung um die Drehachse 158 versetzt, insbesondere um 180° versetzt, zueinander angeordnet. Bei einer Drehung der Betätigungselemente 154 und der Sperrelemente 162 um die Drehachse 158 wird somit beispielsweise das in den Fig. 3 und 4 als Betätigungselement 154 bezeichnete exzentrisch gelagerte Element von dem in den Fig. 3 und 4 als Betätigungsabschnitt 156 bezeichneten Abschnitt eines Arretierelements 144 wegbewegt. Zugleich bewegt sich das zugehörige Sperrelement 162 auf den Sperrabschnitt 164 desselben Arretierelements 144 zu. Hierdurch wird eine Schwenkung des Arretierelements 144 um die Schwenkachse 149 bewirkt.

Vorzugsweise liegt das Arretierelement 144 mit dem Betätigungsabschnitt 156 stets an dem Betätigungselement 154 und/oder mit dem Sperrabschnitt 164 stets an dem Sperrelement 162 an. Das Arretierelement 144 wird vorzugsweise durch eine Drehung des Betätigungselements 154 und des Sperrelements 162 um die Drehachse 158 bewegt.

Die Arretiervorrichtung 122 umfasst ein Antriebselement 170, mit welchem die Betätigungselemente 154 und die Sperrelemente 162 um die Drehachse 158 drehbar sind.

Die Arretierelemente 144 können durch eine Drehung des Antriebselements 170, welches vorzugsweise ebenfalls auf der gemeinsamen Welle 168 angeordnet ist, von der in Fig. 3 dargestellten Offenstellung in die in Fig. 4 dargestellte Arretierstellung und/oder von der in Fig. 4 dargestellten Arretierstellung in die in Fig. 3 dargestellte Offenstellung gebracht werden.

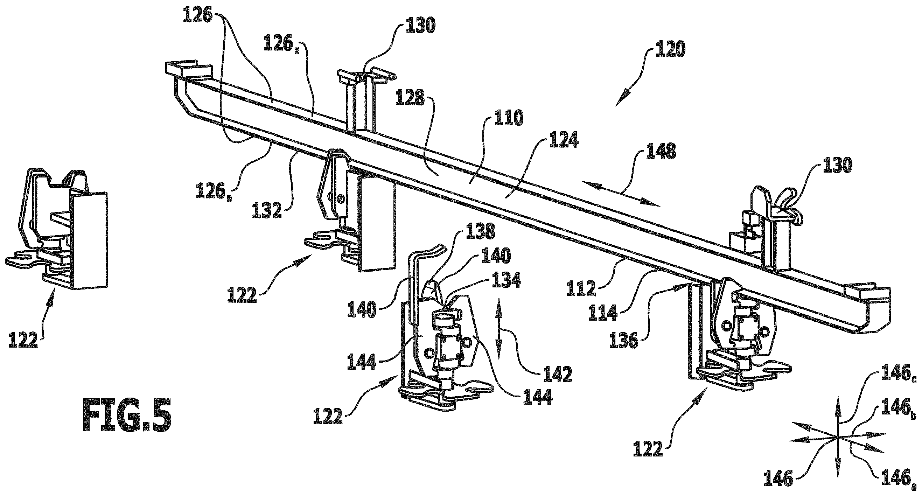

Wie insbesondere den Fig. 4 und 5 zu entnehmen ist, sind die Arretierelemente 144 in der Arretierstellung mittels der Eingriffabschnitte 150 der Arretierelemente 144 mit dem dem Werkstück 104 abgewandten flachen Endbereich 126a des Doppel-T-Trägers 124 des Aufnahmeelements 110 in Eingriff.

Es besteht vorzugsweise eine formschlüssige Verbindung zwischen einem Aufnahmeelement 110 und einer Arretiervorrichtung 122.

Als zusätzliche Sicherung kann vorgesehen sein, dass ein Arretierelement 144, insbesondere eines der beweglichen Arretierelemente 144, ein zusätzliches Sicherungselement 140 umfasst, welches in der in Fig. 5 dargestellten Arretierstellung der Arretiervorrichtung 122 den dem Werkstück 104 zugewandten flachen Endbereich 126z übergreift.

Die vorstehend beschriebene Förderanlage 100 funktioniert wie folgt:
Ein mittels zweier Aufnahmeelemente 110 aufgenommenes Werkstück 104 wird mittels der Fördervorrichtung 102 in der Förderrichtung 106 gefördert.

Insbesondere wird das Werkstück 104 einer (nicht dargestellten) Tauchlackieranlage zugeführt.

Zum Lackieren des Werkstücks 104 wird das Werkstück 104 zunächst an der Bewegungsvorrichtung 116 festgelegt.

Hierzu ist die Befestigungsvorrichtung 120 vorgesehen, welche die Arretiervorrichtungen 122 umfasst.

Zum Festlegen des Werkstücks 104 an der Bewegungsvorrichtung 116 werden die Aufnahmeelemente 110 mit den Arretiervorrichtungen 122 in Eingriff gebracht.

Insbesondere werden die Aufnahmeelemente 110 in der Positionierrichtung 142 auf die Auflageflächen 134 der Arretiervorrichtung 122 aufgelegt und/oder die Arretiervorrichtungen 122 in der Positionierrichtung 142 auf die Aufnahmeelemente 110 zubewegt.

Die Arretiervorrichtungen 122 greifen insbesondere an den dem Werkstück 104 abgewandten flachen Endbereichen 126a der Doppel-T-Träger 124 der Aufnahmeelemente 110 an.

Insbesondere werden unbewegliche Arretierelemente 138 mit Ausnehmungen 136 in den Aufnahmeelementen 110 in Eingriff gebracht, um die Aufnahmeelemente 110 bezüglich der ersten Raumrichtung 146a und bezüglich der zweiten Raumrichtung 146b relativ zu der Arretiervorrichtung 122 und somit auch relativ zu der Bewegungsvorrichtung 116 festzulegen.

Grundsätzlich kann vorgesehen sein, dass jede Arretiervorrichtung 122 ein solches unbewegliches Arretierelement 138 umfasst.

Es kann jedoch auch vorgesehen sein, dass nur einzelne Arretiervorrichtungen 122 ein solches unbewegliches Arretierelement 138 umfassen (siehe insbesondere Fig. 2).

Zum Arretieren der Aufnahmeelemente 110 in der dritten Raumrichtung 146c wird das Antriebselement 170 beispielsweise mit einem (nicht dargestellten) Betätiger oder einem (nicht dargestellten) Antriebsmotor gedreht.

Hierdurch werden auch die exzentrisch gelagerten Betätigungselemente 154 der Betätigungsvorrichtung 152 sowie die exzentrisch gelagerten Sperrelemente 162 der Sperrvorrichtung 160 gedreht.

Die Drehung der Betätigungselemente 154 und der Sperrelemente 162 hat eine Schwenkung der Arretierelemente 144 um die Schwenkachsen 149 zur Folge.

Insbesondere werden die Arretierelemente 144 hierdurch von der in Fig. 3 dargestellten Offenstellung in die in Fig. 4 dargestellte Arretierstellung gebracht.

Die Eingriffabschnitte 150 der Arretierelemente 144 werden dabei aufeinanderzu bewegt und hintergreifen schließlich in der in Fig. 4 dargestellten Arretierstellung die dem Werkstück 104 abgewandten flachen Endbereiche 126a der Aufnahmeelemente 110.

Sobald die Arretiervorrichtungen 122 in der Arretierstellung sind, können die Aufnahmeelemente 110 und das daran angeordnete Werkstück 104 in sämtlichen Raumrichtungen 146 mittels der Bewegungsvorrichtung 116 bewegt werden.

Insbesondere kann das Werkstück 104 in der Bewegungsrichtung 118 bewegt, insbesondere um eine horizontale Achse gedreht, werden, um in ein Tauchbecken der Tauchlackieranlage eingetaucht und wieder aus dem Tauchbecken entnommen zu werden.

Zum Lösen der Verbindung zwischen dem Aufnahmeelement 110 und der Bewegungsvorrichtung 116 wird das Antriebselement 170 beispielsweise mittels des (nicht dargestellten) Betätigers oder Antriebsmotors weiter um die Drehachse 158 gedreht. Die Eingriffabschnitte 150 der Arretierelemente 144 werden hierdurch voneinander entfernt und mit den dem Werkstück 104 abgewandten flachen Endbereichen 126a der Aufnahmeelemente 110 außer Eingriff gebracht.

Die Aufnahmeelemente 110 und das daran angeordnete Werkstück 104 können dann von den Arretiervorrichtungen 122 entfernt und beispielsweise mittels der Fördervorrichtung 102 weiter gefördert werden.

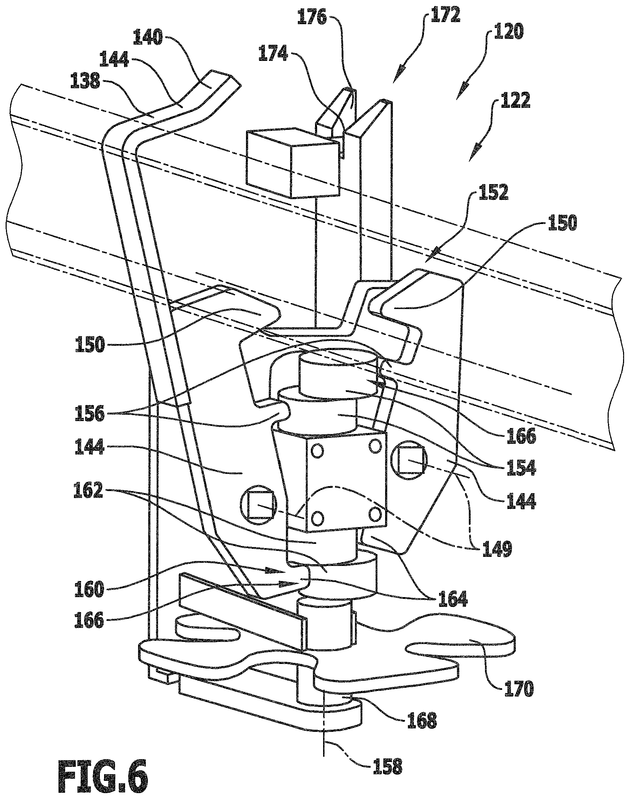

Eine in Fig. 6 dargestellte alternative Ausführungsform einer Befestigungsvorrichtung 120 unterscheidet sich von der in den Fig. 1 bis 5 dargestellten ersten Ausführungsform im Wesentlichen dadurch, dass die Festlegung der Aufnahmeelemente 110 an den Arretiervorrichtungen 122 bezüglich der ersten Raumrichtung 146a, insbesondere der Längsrichtung 148 der Doppel-T-Träger 124 der Aufnahmeelemente 110, mittels einer Bolzenvorrichtung 172 erfolgt.

Die Bolzenvorrichtung 172 umfasst einen Bolzen 174, welcher beispielsweise an einem dem Werkstück 104 zugewandten flachen Endbereich 126z des Aufnahmeelements 110 angeordnet ist, und eine Bolzenaufnahme 176, welche beispielsweise an einer Arretiervorrichtung 122 angeordnet ist.

Insbesondere durch eine Relativbewegung des Aufnahmeelements 110 und der Arretiervorrichtung 122 in der Positionierrichtung 142 können der Bolzen 174 und die Bolzenaufnahme 176 miteinander in Eingriff und außer Eingriff gebracht werden.

Im Übrigen stimmt die in Fig. 6 dargestellte Ausführungsform der Befestigungsvorrichtung 120 hinsichtlich Aufbau und Funktion mit der in den Fig. 1 bis 5 dargestellten Ausführungsform überein, so dass auf deren vorstehende Beschreibung insoweit Bezug genommen wird.

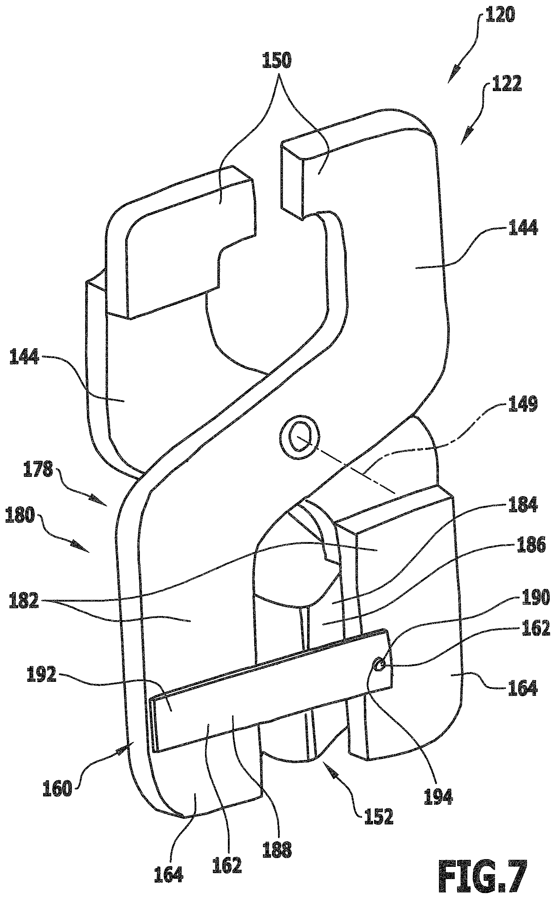

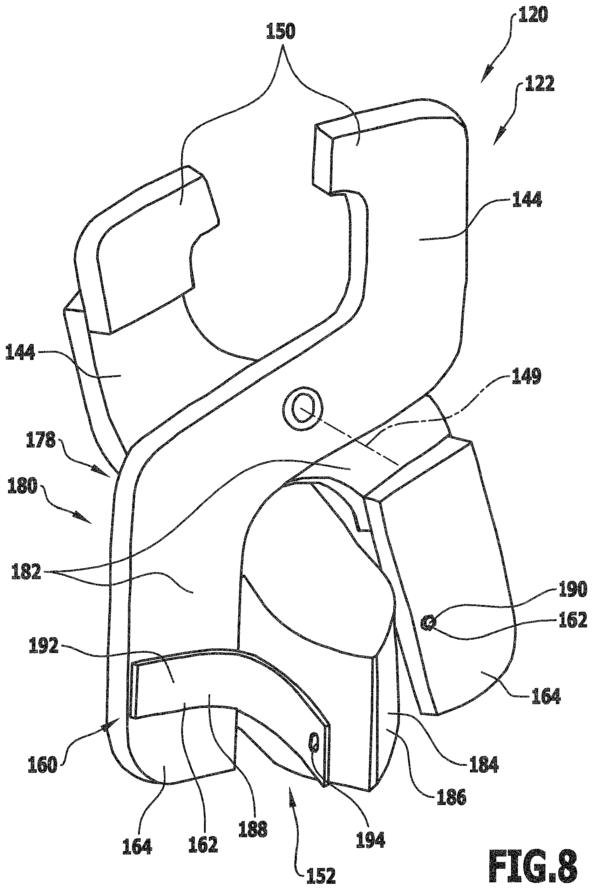

Eine in den Fig. 7 und 8 dargestellte, nicht erfindungsgemäße Ausführungsform der Befestigungsvorrichtung 120 unterscheidet sich von der in den Fig. 1 bis 5 dargestellten Ausführungsform im Wesentlichen dadurch, dass die Betätigungsvorrichtung 152 zum Betätigen der Arretierelemente 144 eine Kulissenvorrichtung 178, insbesondere eine Kulissenbahnvorrichtung 180, umfasst.

Die Arretierelemente 144 sind durch Scherenelemente 182 gebildet, welche um eine zentral angeordnete gemeinsame Schwenkachse 149 relativ zueinander schwenkbar sind.

Die Arretierelemente 144 umfassen dabei jeweils einen Eingriffsabschnitt 150 und einen Sperrabschnitt 164, wobei der Eingriffsabschnitt 150 und der jeweilige Sperrabschnitt 164 eines jeden Arretierelements 144 auf einander gegenüberliegenden Seiten der Schwenkachse 149 angeordnet sind.

Die Scherenelemente 182 sind im Wesentlichen X-förmig angeordnet, wobei die Eingriffsabschnitte 150 und die Sperrabschnitte 164 jeweils einander gegenüberliegend angeordnet sind.

Zwischen den Eingriffsabschnitten 150 kann insbesondere ein Aufnahmeelement 110 aufgenommen werden.

Mittels der Betätigungsvorrichtung 152 kann die Befestigungsvorrichtung 120, insbesondere die Arretiervorrichtung 122, von der in Fig. 7 dargestellten Arretierstellung in die in Fig. 8 dargestellte Offenstellung und/oder von der Offenstellung in die Arretierstellung gebracht werden.

Die Betätigungsvorrichtung 152 umfasst hierzu insbesondere mindestens ein Kulissenelement 184.

Das Kulissenelement 184 ist beispielsweise als ein Dorn 186 ausgebildet.

Das Kulissenelement 184 kann insbesondere zwischen die Sperrabschnitte 164 der Arretierelemente 144 eingebracht werden, um diese auseinander zu drücken.

Hierdurch werden zugleich die Eingriffsabschnitte 150 der Arretierelemente 144 voneinander wegbewegt und somit die Befestigungsvorrichtung 120, insbesondere die Arretiervorrichtung 122, von der Arretierstellung in die Offenstellung gebracht.

Mittels des als Dorn 186 ausgebildeten Kulissenelements 184 wird zudem eine Verriegelungsvorrichtung 188 entriegelt.

Die Verriegelungsvorrichtung 188 bildet insbesondere eine Sperrvorrichtung 160.

Die Verriegelungsvorrichtung 188 umfasst zwei Sperrelemente 162, wobei ein Sperrelement beispielsweise als ein Vorsprung 190 und ein weiteres Sperrelement 162 als ein Federelement 192 ausgebildet ist.

Das Federelement 192 umfasst insbesondere eine Öffnung 194, in welche der Vorsprung 190 einbringbar ist.

Die Sperrelemente 162 sind an den Sperrabschnitten 164 voneinander verschiedener Arretierelemente 144 angeordnet.

Beispielsweise das Federelement 192 erstreckt sich dabei in der in Fig. 7 dargestellten Arretierstellung ausgehend von dem Sperrabschnitt 164 des einen Arretierelements 144 bis zu dem Sperrabschnitt 164 des weiteren Arretierelements 144 und ist in der Arretierstellung mit dem Vorsprung 190 in Eingriff.

Wenn das Federelement 192 mit dem Vorsprung 190 in Eingriff ist, ist die die Sperrvorrichtung 160 bildende Verriegelungsvorrichtung 188 verriegelt, so dass weder die Sperrabschnitte 164 noch die Eingriffsabschnitte 150 auseinander bewegbar sind.

Mittels des Kulissenelements 184 kann das Federelement 192 von dem einen Sperrabschnitt 164 des einen Arretierelements 144 wegbewegt und mit dem Vorsprung 190 außer Eingriff gebracht werden.

Die Verriegelungsvorrichtung 188 ist dann entriegelt.

Durch geeignete Formgebung des Kulissenelements 184, insbesondere durch Ausgestaltung des Kulissenelements 184 als ein Dorn 186, können die Sperrabschnitte 164 der Arretierelemente 144 in einem nächsten Schritt auseinander gedrückt werden, um die Arretiervorrichtung 122 in die Offenstellung zu bringen.

Das als ein Dorn 186 ausgebildete Kulissenelement 184 ist insbesondere eine Innenkulisse, welche zwischen den Sperrabschnitten 164 der Arretierelemente 144 angreift.

Mittels weiterer (nicht dargestellter) Kulissenelemente 184, welche beispielsweise eine Außenkulisse bilden, kann die Arretiervorrichtung 122 vorzugsweise aus der in Fig. 8 dargestellten Offenstellung zurück in die in Fig. 7 dargestellte Arretierstellung gebracht werden.

Das Federelement 192, welches beispielsweise aus Federstahl gebildet ist, gelangt hierdurch vorzugsweise automatisch wieder mit dem Vorsprung 190 in Eingriff, so dass die Verriegelungsvorrichtung 188 automatisch verriegelt wird.

Im Übrigen stimmt die in den Fig. 7 und 8 dargestellte Ausführungsform der Befestigungsvorrichtung 120 hinsichtlich Aufbau und Funktion mit der in den Fig. 1 bis 5 dargestellten Ausführungsform überein, so dass auf deren vorstehende Beschreibung insoweit Bezug genommen wird.

Dadurch, dass bei sämtlichen Ausführungsformen der Befestigungsvorrichtung 120 ein Aufnahmeelement 110 zum Aufnehmen des Werkstücks 104 und eine Arretiervorrichtung 122 zum lösbaren Festlegen des Aufnahmeelements 110 an der Bewegungsvorrichtung 116 vorgesehen sind, weist die Befestigungsvorrichtung 120 einen geringen Raumbedarf auf und ermöglicht sogleich eine sichere Befestigung des Werkstücks 104 an der Bewegungsvorrichtung 116.

## Patentansprüche

1. Befestigungsvorrichtung zum Befestigen eines Werkstücks (104) an einer Bewegungsvorrichtung (116) zum Bewegen des Werkstücks (104), wobei die Befestigungsvorrichtung (120) ein Aufnahmeelement (110) zum Aufnehmen des Werkstücks (104) und eine Arretiervorrichtung (122) zum lösbaren Festlegen des Aufnahmeelements (110) an der Bewegungsvorrichtung (116) umfasst, wobei die Arretiervorrichtung (122) eine eine Exzentervorrichtung (166) umfassende Betätigungsvorrichtung (152) zum Betätigen eines Arretierelements (144) der Arretiervorrichtung (122) umfasst, **dadurch gekennzeichnet, dass** die Arretiervorrichtung (122) mindestens zwei Arretierelemente (138; 144) umfasst,
wobei das Aufnahmeelement (110) mittels mindestens eines Arretierelements (138) bezüglich einer ersten Raumrichtung (146a) und bezüglich einer zu der ersten Raumrichtung (146a) im Wesentlichen senkrechten zweiten Raumrichtung (146b) relativ zu der Bewegungsvorrichtung (116) lösbar festlegbar ist und
wobei das Aufnahmeelement (110) mittels mindestens eines weiteren Arretierelements (144) bezüglich einer dritten Raumrichtung (146c), welche im Wesentlichen senkrecht zu der ersten Raumrichtung (146a) und zu der zweiten Raumrichtung (146b) ist, relativ zu der Bewegungsvorrichtung (116) lösbar festlegbar ist.

2. Befestigungsvorrichtung nach Anspruch 1, **dadurch gekennzeichnet, dass** das Aufnahmeelement (110) zum Fördern des Aufnahmeelements (110) und eines daran angeordneten Werkstücks (104) längs einer Förderrichtung (106) mittels einer Anlagefläche (112) an eine Fördervorrichtung (102) anlegbar ist und dass zum lösbaren Festlegen des Aufnahmeelements (110) an der Bewegungsvorrichtung (116) die Arretiervorrichtung (122) durch eine Bewegung in einer im Wesentlichen senkrecht zu der Anlagefläche (112) des Aufnahmeelements (110) ausgerichteten Positionierrichtung (142) der Arretiervorrichtung (122) mit dem Aufnahmeelement (110) in Eingriff bringbar ist.

3. Befestigungsvorrichtung nach einem der Ansprüche 1 oder 2, **dadurch gekennzeichnet, dass** die Befestigungsvorrichtung (120) mindestens zwei Aufnahmeelemente (110) und mindestens zwei Arretiervorrichtungen (122) umfasst, wobei die mindestens zwei Aufnahmeelemente (110) mittels des Werkstücks (104) miteinander verbunden sind, insbesondere ausschließlich mittels des Werkstücks (104) miteinander verbunden sind.

4. Befestigungsvorrichtung nach Anspruch 3, **dadurch gekennzeichnet, dass** mittels jeweils mindestens einer Arretiervorrichtung (122) jeweils ein Aufnahmeelement (110) in allen drei Raumrichtungen (146) relativ zu der Bewegungsvorrichtung (116) festlegbar ist.

5. Befestigungsvorrichtung nach einem der Ansprüche 1 bis 4, **dadurch gekennzeichnet, dass** das Aufnahmeelement (110) im Wesentlichen schienenförmig, insbesondere als ein Doppel-T-Träger, ausgebildet ist.

6. Befestigungsvorrichtung nach einem der Ansprüche 1 bis 5, **dadurch gekennzeichnet, dass** die Arretiervorrichtung (122) ein bewegliches Arretierelement (144) umfasst, mittels welchem zumindest ein Abschnitt des Aufnahmeelements (110) in einer Arretierstellung der Arretiervorrichtung (122) hintergreifbar ist, und/oder dass die Arretiervorrichtung (122) ein Arretierelement (138; 144) umfasst, welches mit einer Einbuchtung, Öffnung und/oder Ausnehmung (136) des Aufnahmeelements (110) in Eingriff bringbar ist.

7. Befestigungsvorrichtung nach einem der Ansprüche 1 bis 6, **dadurch gekennzeichnet, dass** die Arretiervorrichtung (122) ein schwenkbares und/oder linear bewegliches Arretierelement (138; 144) umfasst, welches mit dem Aufnahmeelement (110) in Eingriff bringbar ist, und/oder dass die Arretiervorrichtung (122) ein Arretierelement (138; 144) umfasst, welches um eine im Wesentlichen senkrecht zu einer Positionierrichtung (142) der Arretiervorrichtung (122) verlaufende Achse (149) schwenkbar ist.

8. Befestigungsvorrichtung nach einem der Ansprüche 1 bis 7, **dadurch gekennzeichnet, dass** die Arretiervorrichtung (122) eine Betätigungsvorrichtung (152) zum Betätigen eines Arretierelements (144) der Arretiervorrichtung (122) umfasst, wobei die Betätigungsvorrichtung (152) ein Betätigungselement (154) zum Betätigen des Arretierelements (144) umfasst, mittels welchem das Arretierelement (144) wahlweise in eine Arretierstellung, in welcher das Arretierelement (144) mit dem Aufnahmeelement (110) in Eingriff ist, und in eine Offenstellung, in welcher das Aufnahmeelement (110) relativ zu dem Arretierelement (144) beweglich ist, bringbar ist.

9. Befestigungsvorrichtung nach einem der Ansprüche 1 bis 8, **dadurch gekennzeichnet, dass** die Arretiervorrichtung (122) eine Sperrvorrichtung (160) umfasst, mittels welcher ein unerwünschtes Bewegen des Arretierelements (144) von einer Arretierstellung, in welcher das Arretierelement (144) mit dem Aufnahmeelement (110) in Eingriff ist, in eine Offenstellung, in welcher das Aufnahmeelement (110) relativ zu dem Arretierelement (144) beweglich ist, und/oder von der Offenstellung in die Arretierstellung sperrbar ist.

10. Befestigungsvorrichtung nach Anspruch 9, **dadurch gekennzeichnet, dass** die Sperrvorrichtung (160) eine Exzentervorrichtung (166) umfasst.

11. Befestigungsvorrichtung nach einem der Ansprüche 9 oder 10, **dadurch gekennzeichnet, dass** die Betätigungsvorrichtung (152) und die Sperrvorrichtung (160) durch eine gemeinsame Exzentervorrichtung (166) gebildet sind.

12. Befestigungsvorrichtung nach einem der Ansprüche 1 bis 11, **dadurch gekennzeichnet, dass** die Exzentervorrichtung (166) exzentrisch gelagerte Betätigungselemente (154) und/oder exzentrisch gelagerte Sperrelemente (162) umfasst.

13. Befestigungsvorrichtung nach einem der Ansprüche 1 bis 12, **dadurch gekennzeichnet, dass** mindestens ein exzentrisch gelagertes Betätigungselement (154), mindestens ein exzentrisch gelagertes Sperrelement (162) und/oder ein Antriebselement (170) zum Antreiben der Betätigungsvorrichtung (152) und/oder der Sperrvorrichtung (160) auf einer gemeinsamen Welle (168) angeordnet sind.

14. Förderanlage zum Fördern von Werkstücken (104), umfassend
- eine Befestigungsvorrichtung (120) nach einem der Ansprüche 1 bis 13;
- eine Bewegungsvorrichtung (116) zum Bewegen eines Werkstücks (104); und
- eine Fördervorrichtung (102), mittels welcher das Werkstück (104), das an einem Aufnahmeelement (110) der Befestigungsvorrichtung (120) angeordnet ist, förderbar ist.

15. Arretiervorrichtung, umfassend ein Arretierelement (144) und eine eine Exzentervorrichtung (166) umfassende Betätigungsvorrichtung (152) zum Betätigen des Arretierelements (144), wobei das Arretierelement (144) mittels der Betätigungsvorrichtung (152) wahlweise in eine Arretierstellung, in welcher das Arretierelement (144) mit einem zu arretierenden Element (110) in Eingriff ist, und in eine Offenstellung, in welcher das zu arretierende Element (110) relativ zu dem Arretierelement (144) beweglich ist, bringbar ist,
**dadurch gekennzeichnet, dass** die Arretiervorrichtung (122) mindestens zwei Arretierelemente (138; 144) umfasst,
wobei das zu arretierende Element (110) mittels mindestens eines Arretierelements (138) bezüglich einer ersten Raumrichtung (146a) und bezüglich einer zu der ersten Raumrichtung (146a) im Wesentlichen senkrechten zweiten Raumrichtung (146b) relativ zu der Bewegungsvorrichtung (116) lösbar festlegbar ist und
wobei das zu arretierende Element (110) mittels mindestens eines weiteren Arretierelements (144) bezüglich einer dritten Raumrichtung (146c), welche im Wesentlichen senkrecht zu der ersten Raumrichtung (146a) und zu der zweiten Raumrichtung (146b) ist, relativ zu der Bewegungsvorrichtung (116) lösbar festlegbar ist.

16. Arretiervorrichtung nach Anspruch 15, **dadurch gekennzeichnet, dass** die Arretiervorrichtung (122) eine Sperrvorrichtung (160) umfasst, mittels welcher ein unerwünschtes Bewegen des Arretierelements (144) von der Arretierstellung in die Offenstellung und/oder von der Offenstellung in die Arretierstellung sperrbar ist.

## Claims

1. A fastening device for fastening a workpiece (104) to a moving device (116) for moving the workpiece (104), wherein the fastening device comprises a receiving element (110) for holding the workpiece (104) and a locking device (122) for detachably fixing the receiving element (110) to the moving device (116), wherein the locking device (122) comprises an actuating device (152) comprising an eccentric device (166) for actuating a locking element (144) of the locking device (122), **characterized in that** the locking device (122) comprises at least two locking elements (138; 144),
wherein the receiving element (110) is detachably fixable by means of at least one locking element (138) with respect to a first spatial direction (146a) and with respect to a second spatial direction (146b) substantially perpendicular to the first spatial direction (146a) relative to the moving device (116) and
wherein the receiving element (110) is detachably fixable by means of at least one additional locking element (144) with respect to a third spatial direction (146c) which is substantially perpendicular to the first spatial direction (146a) and to the second spatial direction (146b) relative to the moving device (116).

2. The fastening device according to Claim 1, **characterized in that** the receiving element (110) is configured to be seated on a conveying device (102) by means of a seating face (112) for conveying the receiving element (110) and a workpiece (104) arranged thereon along a conveying direction (106), and **in that** the locking device (122) is configured to engage with the receiving element (110) by a movement in a positioning direction (142) of the locking device (122) aligned substantially perpendicular to the contact surface (112) of the receiving element (110) for detachably fixing the receiving element (110) to the moving device (116).

3. The fastening device according to any one of Claims 1 or 2, **characterized in that** the fastening device (120) comprises at least two receiving elements (110) and at least two locking devices (122), wherein the at least two receiving elements (110) are connected to each other by means of the workpiece (104), in particular connected to each other exclusively by means of the workpiece (104).

4. The fastening device according to Claim 3, **characterized in that** each receiving element (110) is fixable in all three spatial directions (146) relative to the moving device (116) by means of at least one locking device (122) each.

5. The fastening device according to any one of Claims 1 to 4, **characterized in that** the receiving element (110) is designed substantially rail-shaped, in particular as an I-beam.

6. The fastening element according to any one of Claims 1 to 5, **characterized in that** the locking device (122) comprises a moveable locking element (144), by means of which at least one segment of the receiving element (110) in a locking positon is configured to engage behind the locking device (122), and/or **in that** the locking device (122) comprises a locking element (138; 144) which is configured to engage with an indentation, opening, and/or a recess (136) of the receiving element (110).

7. The fastening device according to any one of the claims 1 to 6, **characterized in that** the locking device (122) comprises a pivoting and/or linearly moveable locking element (138; 144) which is configured to engage with the receiving element (110) and/or **in that** the locking device (122) comprises a locking element (138; 144) which is configured to pivot about an axis (149) running substantially perpendicular to a positioning direction of the locking device (122).

8. The fastening device according to any one of Claims 1 to 7, **characterized in that** the locking device (122) comprises an actuating device (152) for actuating a locking element (144) of the locking device (122), wherein the actuating device (152) comprises an actuating element (154) for actuating the locking element (144), by means of which the locking element (144) may optionally be brought into a locking position, in which the locking element (144) is engaged with the receiving element (110), and into an open position, in which the receiving element (110) is moveable relative to the locking element (144).

9. The fastening device according to any one of Claims 1 to 8, **characterized in that** the locking device (122) comprises a stopping device (160), by means of which an unwanted moving of the locking element (144) from the locking position, in which the locking element (144) in engaged with the receiving element (110), into an open position, in which the receiving element (110) is moveable relative to the locking element (144), and/or from the open position into the locking position may be stopped.

10. The fastening device according to Claim 9, **characterized in that** the stopping device (160) comprises an eccentric device (166).

11. The fastening device according to any one of Claims 9 or 10, **characterized in that** the actuating device (152) and the stopping device (160) are formed by a shared eccentric device (166).

12. The fastening device according to any one of Claims 1 to 11, **characterized in that** the eccentric device (166) comprises eccentrically mounted actuating elements (154) and/or eccentrically mounted stopping elements (162).

13. The fastening device according to any one of Claims 1 to 12, **characterized in that** at least one eccentrically mounted actuating element (154), at least one eccentrically mounted stopping element (162), and/or a drive element (170) for driving the actuating device (152) and/or the stopping device (160) are arranged on a shared shaft (168).

14. A conveyor system for conveying workpieces (104) comprising
- a fastening device (120) according to any one of Claims 1 to 13;
- a moving device (116) for moving a workpiece (104); and
- a conveying device (102), by means of which the workpiece (104) that is arranged on a receiving element (110) of the fastening device (120) is conveyable.

15. A locking device comprising a locking element (144) and an actuating device (152) comprising an eccentric device (166) for actuating the locking element (144), wherein the locking element (144) may optionally be brought by means of the actuating device (152) into a locking position, in which the locking element (144) is engaged with an element to be locked (110), and into an open position, in which the element to be locked (110) is moveable relative to the locking element (144),
**characterized in that** the locking device (122) comprises at least two locking elements (138; 144),
wherein the element to be locked (110) is detachably fixable by means of at least one locking element (138) with respect to a first spatial direction (146a) and with respect to a second spatial direction (146b) substantially perpendicular to the first spatial direction (146a) relative to the moving device (116), and
wherein the element to be locked (110) is detachably fixable by means of at least one additional locking element (144) with respect to a third spatial direction (146c) which is substantially perpendicular to the first spatial direction (146a) and to the second spatial direction (146b) relative to the moving device (116).

16. The locking device according to Claim 15, **characterized in that** the locking device (122) comprises a stopping device (160), by means of which an unwanted moving of the locking element (144) from the locking position into the open position and/or from the open position into the locking position may be stopped.

## Revendications

1. Dispositif de fixation pour la fixation d'une pièce (104) sur un dispositif de déplacement (116) pour le déplacement de la pièce (104), dans lequel le dispositif de fixation (120) comporte un élément de réception (110) pour la réception de la pièce (104) et un dispositif d'arrêt (122) pour la fixation amovible de l'élément de réception (110) sur le dispositif de déplacement (116), dans lequel le dispositif d'arrêt (122) comporte un dispositif d'actionnement (152) comportant un dispositif à excentrique (166) pour l'actionnement d'un élément d'arrêt (144) du dispositif d'arrêt (122), **caractérisé en ce que** le dispositif d'arrêt (122) comporte au moins deux éléments d'arrêt (138 ; 144),
dans lequel l'élément de réception (110) peut être fixé de manière amovible à l'aide d'au moins un élément d'arrêt (138) par rapport à une première direction spatiale (146a) et par rapport à une deuxième direction spatiale (146b) sensiblement perpendiculaire à la première direction spatiale (146a) relativement au dispositif de déplacement (116) et
dans lequel l'élément de réception (110) peut être fixé de manière amovible à l'aide d'au moins un autre élément d'arrêt (144) par rapport à une troisième direction spatiale (146c) qui est sensiblement perpendiculaire à la première direction spatiale (146a) et à la deuxième direction spatiale (146b), relativement au dispositif de déplacement (116).

2. Dispositif de fixation selon la revendication 1, **caractérisé en ce que** l'élément de réception (110) peut être posé pour le transport de l'élément de réception (110) et d'une pièce (104) agencée sur celui-ci le long d'une direction de transport (106) à l'aide d'une surface d'appui (112) contre un dispositif de transport (102) et **en ce que** pour la fixation amovible de l'élément de réception (110) sur le dispositif de déplacement (116) le dispositif d'arrêt (122) peut être amené en prise par un déplacement dans un sens de positionnement (142) orienté sensiblement perpendiculairement à la surface d'appui (112) de l'élément de réception (110) du dispositif d'arrêt (122) avec l'élément de réception (110).

3. Dispositif de fixation selon l'une des revendications 1 ou 2, **caractérisé en ce que** le dispositif de fixation (120) comporte au moins deux éléments de réception (110) et au moins deux dispositifs d'arrêt (122), dans lequel les au moins deux éléments de réception (110) sont reliés l'un à l'autre à l'aide de la pièce (104), en particulier sont reliés l'un à l'autre exclusivement à l'aide de la pièce (104).

4. Dispositif de fixation selon la revendication 3, **caractérisé en ce qu'**à l'aide de respectivement au moins un dispositif d'arrêt (122) respectivement un élément de réception (110) peut être fixé dans l'ensemble des trois directions spatiales (146) relativement au dispositif de déplacement (116).

5. Dispositif de fixation selon l'une des revendications 1 à 4, **caractérisé en ce que** l'élément de réception (110) est réalisé sensiblement en forme de rail, en particulier comme un support en double T.

6. Dispositif de fixation selon l'une des revendications 1 à 5, **caractérisé en ce que** le dispositif d'arrêt (122) comporte un élément d'arrêt (144) mobile, à l'aide duquel au moins une section de l'élément de réception (110) peut être mise en prise derrière dans une position d'arrêt du dispositif d'arrêt (122) et/ou **en ce que** le dispositif d'arrêt (122) comporte un élément d'arrêt (138 ; 144) qui peut être mis en prise avec un creux, une ouverture et/ou un évidement (136) de l'élément de réception (110).

7. Dispositif de fixation selon l'une des revendications 1 à 6, **caractérisé en ce que** le dispositif d'arrêt (122) comporte un élément d'arrêt (138 ; 144) pivotant et/ou mobile linéairement, qui peut être amené en prise avec l'élément de réception (110) et/ou **en ce que** le dispositif d'arrêt (122) comporte un élément d'arrêt (138 ; 144) qui peut être pivoté autour d'un axe (149) s'étendant sensiblement perpendiculairement à un sens de positionnement (142) du dispositif d'arrêt (122).

8. Dispositif de fixation selon l'une des revendications 1 à 7, **caractérisé en ce que** le dispositif d'arrêt (122) comporte un dispositif d'actionnement (152) pour l'actionnement d'un élément d'arrêt (144) du dispositif d'arrêt (122), dans lequel le dispositif d'actionnement (152) comporte un élément d'actionnement (154) pour l'actionnement de l'élément d'arrêt (144), à l'aide duquel l'élément d'arrêt (144) peut être amené au choix dans une position d'arrêt dans laquelle l'élément d'arrêt (144) est en prise avec l'élément de réception (110), et dans une position ouverte dans laquelle l'élément de réception (110) est mobile relativement à l'élément d'arrêt (144).

9. Dispositif de fixation selon l'une des revendications 1 à 8, **caractérisé en ce que** le dispositif d'arrêt (122) comporte un dispositif de blocage (160), à l'aide duquel il est permis de bloquer un déplacement non souhaité de l'élément d'arrêt (144) d'une position d'arrêt, dans laquelle l'élément d'arrêt (144) est en prise avec l'élément de réception (110), à une position ouverte, dans laquelle l'élément de réception (110) est mobile relativement à l'élément d'arrêt (144), et/ou de la position ouverte à la position d'arrêt.

10. Dispositif de fixation selon la revendication 9, **caractérisé en ce que** le dispositif de blocage (160) comporte un dispositif à excentrique (166).

11. Dispositif de fixation selon l'une des revendications 9 ou 10, **caractérisé en ce que** le dispositif d'actionnement (152) et le dispositif de blocage (160) sont formés par un dispositif à excentrique (166) commun.

12. Dispositif de fixation selon l'une des revendications 1 à 11, **caractérisé en ce que** le dispositif à excentrique (166) comporte des éléments d'actionnement (154) logés de manière excentrée et/ou des éléments de blocage (162) logés de manière excentrée.

13. Dispositif de fixation selon l'une des revendications 1 à 12, **caractérisé en ce qu'**au moins un élément d'actionnement (154) logé de manière excentrée, au moins un élément de blocage (162) logé de manière excentrée et/ou un élément d'entraînement (170) sont agencés pour l'entraînement du dispositif d'actionnement (152) et/ou du dispositif de blocage (160) sur un arbre commun (168).

14. Installation de transport pour le transport de pièces (104), comprenant :
- un dispositif de fixation (120) selon l'une des revendications 1 à 13 ;
- un dispositif de déplacement (116) pour le déplacement d'une pièce (104) ; et
- un dispositif de transport (102) à l'aide duquel la pièce (104) qui est agencée sur un élément de réception (110) du dispositif de fixation (120), peut être transportée.

15. Dispositif d'arrêt, comprenant un élément d'arrêt (144) et un dispositif d'actionnement (152) comprenant un dispositif à excentrique (166) pour l'actionnement de l'élément d'arrêt (144), dans lequel l'élément d'arrêt (144) peut être amené à l'aide du dispositif d'actionnement (152) au choix dans une position d'arrêt, dans laquelle l'élément d'arrêt (144) est en prise avec un élément (110) à arrêter, et dans une position ouverte, dans laquelle l'élément à arrêter (110) est mobile relativement à l'élément d'arrêt (144),
**caractérisé en ce que** le dispositif d'arrêt (122) comporte au moins deux éléments d'arrêt (138 ; 144),
l'élément à arrêter (110) étant apte à être fixé de manière amovible à l'aide d'au moins un élément d'arrêt (138) par rapport à une première direction spatiale (146a) et par rapport à une deuxième direction spatiale (146b) sensiblement perpendiculaire à la première direction spatiale (146a) relativement au dispositif de déplacement (116) et
l'élément à arrêter (110) étant apte à être fixé de manière amovible à l'aide d'au moins un autre élément d'arrêt (144) par rapport à une troisième direction spatiale (146c) qui est sensiblement perpendiculaire à la première direction spatiale (146a) et à la deuxième direction spatiale (146b), relativement au dispositif de déplacement (116).

16. Dispositif d'arrêt selon la revendication 15, **caractérisé en ce que** le dispositif d'arrêt (122) comporte un dispositif de blocage (160) à l'aide duquel un déplacement non souhaité de l'élément d'arrêt (144) de la position d'arrêt à la position ouverte et/ou de la position ouverte à la position d'arrêt peut être bloqué.
